# EUROPEAN PATENT SPECIFICATION

(11) **EP 2 833 764 B1**
(45) Date of publication and mention of the grant of the patent: **18.11.2015**
(21) Application number: 13732586.6
(22) Date of filing: 02.07.2013
(51) Int. Cl.: A47J 31/44, B65D 85/804

(54) **METHOD AND DEVICE FOR BREWING A BEVERAGE**
VERFAHREN UND VORRICHTUNG ZUM BRAUEN EINES GETRÄNKS
PROCÉDÉ ET DISPOSITIF POUR INFUSER UNE BOISSON

(30) Priority: 06.07.2012 EP 12175405; 06.07.2012 EP 12175406; 21.03.2013 EP 13160328; 21.03.2013 EP 13160324; 21.03.2013 EP 13160325; 21.03.2013 EP 13160326; 21.03.2013 EP 13160342
(43) Date of publication of application: 11.02.2015
(73) Proprietor: Unilever PLC, London, Greater London EC4Y 0DY (GB); Unilever N.V., 3013 AL Rotterdam (NL)
(72) Inventor: CROSS, David Murray, Melbourn Hertfordshire SG8 6PD (GB); PATON, Michael, Melbourn Hertfordshire SG8 6PD (GB); POPA, Cristian Simion, Melbourn Hertfordshire SG8 6PD (GB); SMITH, Alistair David, Bedford Bedfordshire MK44 1LQ (GB); TOON, Daniel Thomas, Essex CM16 6NF (GB)
(74) Representative: Keenan, Robert Daniel
(86) International application number: PCT/EP2013/063943
(87) International publication number: WO 2014/006049

(56) References cited:
- EP-A2- 1 658 796
- WO-A1-2007/042485
- WO-A1-2009/130311
- US-A- 5 813 317

## Description

### Technical field of the invention

The present invention relates to a method and device for brewing a beverage. In particular, the invention relates to infused beverages such as tea that are brewed in a device having an infusion chamber.

### Background to the invention

Beverages such as tea and coffee are usually prepared in the home using ground coffee, tea bags or loose-leaf tea. However, the long brewing time required and the mess produced are inconvenient. Therefore, brewing devices have been devised which provide a convenient, rapid and consumer friendly way of brewing such beverages. The beverage material is typically provided in a single use capsule or other container which is disposed of after brewing the beverage. For coffee beverages the capsule itself typically functions as the brewing chamber. The volume of the capsule is normally less than that of the final beverage, so it is necessary for the brewing water to flow through the capsule. This is achieved by having a filter in the capsule so that the brewed beverage can be dispensed whilst the beverage material is retained, and is disposed of together with the capsule.

This method, however, is not well-suited for brewing tea, as tea leaves require a larger volume in which to infuse. Therefore devices for brewing tea have been designed which have a separate, larger infusion chamber. For example, WO 2007 / 042485 discloses a device for preparing an infused beverage, having an infusion container for containing liquid. A cartridge containing tea leaves is introduced into a cavity in the device. The bottom part of the cartridge comprises a liquid-permeable filter. The infusion container and the cavity communicate with each other, so that when liquid is poured into the infusion container it flows to the cartridge. The tea leaves are thus immersed in the liquid and infusion takes place. After infusion has taken place, a passage communicating with the cavity is opened to let the infused liquid flow from the infusion container through the cavity and through the filter of the cartridge to the passage. The spent tea leaves are collected in the cartridge and are removed from the cavity together with the cartridge. Whilst the infusion chamber allows space for tea leaves to infuse, this method has a number of disadvantages. In particular the cartridge has firstly to provide sufficient area for the filter to allow the beverage to be dispensed in a short time once brewing has taken place, and secondly to have sufficient volume to contain the spent tea leaves which swell during infusion, typically to around four times their dry volume. Thus the cartridge has to be relatively large. It also has to be sufficiently strong to support the weight of the spent tea leaves when it is removed from the device. Furthermore it has to be connectable to the infusion chamber in a liquid-impermeable manner, so that the beverage does not leak out, which in turn requires the cartridge to have at least a rigid lip or flange. Thus the cartridge needs to be made out of a material such as plastic or aluminium, and because of its size, a significant amount of this material is required. However, this is undesirable from the point of view both of cost and environmental impact. Hence it is an object of the present invention to provide a method for brewing a beverage which overcomes this disadvantage.

### Brief description of the invention

In a first aspect, the present invention provides a method of preparing a beverage in a brewing device, the device comprising:
- an infusion chamber with a bottom rim which defines an opening;
- a capsule holder for receiving a capsule, the capsule holder comprising a sidewall having an upper rim, a filter and an openable and closable passage on the opposite side of the filter from the upper rim;
the method comprising the steps of:
a) inserting a capsule containing infusible beverage material into the capsule holder;
b) connecting the upper rim of the capsule holder to the bottom rim of the infusion chamber;
c) introducing liquid into the capsule and releasing the beverage material from the capsule so that the liquid and beverage material mix and flow into the infusion chamber so as to brew the beverage;
d) after brewing has taken place, opening the passage in the capsule holder to allow the beverage to flow from the infusion chamber through the filter and out through the passage.

In a second aspect the present invention provides a brewing device, the device comprising
- an infusion chamber with a bottom rim which defines an opening;
- a capsule holder for receiving a capsule, the capsule holder comprising a sidewall having an upper rim, a filter and an openable and closable passage on the opposite side of the filter from the upper rim;
- means for moving the capsule holder and / or the infusion chamber so that the upper rim of the capsule holder is connected to the bottom rim of the infusion chamber;
- means for introducing liquid into the capsule so that the liquid and beverage material can mix and flow into the infusion chamber so as to brew the beverage;
- a valve for opening the passage in the capsule holder to allow the beverage to flow from the infusion chamber through the filter and out through the passage.

By having the filter in the capsule holder rather than in the capsule, the capsule holder can perform the functions performed in the prior art by the capsule, and thus the functionality required of the capsule is significantly reduced. Firstly, since the beverage is filtered through the capsule holder, there is no need for the capsule to provide sufficient area for the filter; there is also no need to puncture or otherwise open the capsule on two opposite sides. Secondly, there is no need for the capsule to hold the spent tea leaves. Thirdly, the capsule does not need to form a water-tight connection with the infusion chamber. In fact, the capsule is immersed in the brewing liquid. Thus the capsule can be much smaller and can have thinner walls since it only needs to be large enough and strong enough to contain the dry tea leaves. Moreover, it can be made of non-rigid materials (for example paper) or could even be made of a soluble material which becomes part of the beverage, leaving no waste.

### Detailed description of the invention

The term "beverage" refers to a substantially aqueous drinkable composition suitable for human consumption. Preferably the beverage comprises at least 85% water by weight of the beverage, more preferably at least 90% and most preferably from 95 to 99.9%. Preferably the beverage is a 'tea-based beverage', i.e. a beverage comprising at least 0.01 % by weight tea solids. Preferably the tea-based beverage comprises from 0.04 to 3%, more preferably from 0.06 to 2%, most preferably from 0.1 to 1 % by weight tea solids.

The term "infusible beverage material" refers to a beverage ingredient that when steeped or soaked in an aqueous liquid releases certain soluble substances into the liquid, e.g. flavour and/or aroma molecules. Preferred examples of infusible beverage materials are tea plant material, herb plant material, fruit pieces and / or flower material (e.g. petals). The term 'tea' refers to leaf and / or stem material from *Camellia sinensis var. sinensis* or *Camellia sinensis var. assamica.* It also includes rooibos obtained from *Aspalathus linearis.* 'Tea' is also intended to include the product of blending two or more of any of these teas. The leaf material may be substantially fermented i.e. black tea, semi-fermented i.e. oolong tea, or substantially unfermented i.e. green tea. The tea can be flavoured and/or spiced. Preferably the infusible beverage material is dried and has a moisture content of less than 30 wt %, more preferably less than 20 wt % and most preferably from 0.1 to 10 wt %.

The term 'brewing' refers to the addition of a liquid, particularly hot water, to an infusible beverage material thereby to form a beverage. Brewing may be carried out at any temperature, but preferably in the range of 80 to 95°C.

The term "infusion chamber" means a vessel which in which infusion of infusible beverage material takes place, and which is large enough both to allow the beverage material to move around in the liquid during infusion, and also to contain a substantial part, at least 75% of the volume of the final beverage. The term "infusion chamber" therefore does not refer to capsules inside which brewing takes place (as is typically the case in coffee machines).

The term "capsule" is to be understood broadly, and includes cartridges, pods, and packages etc. Capsules may be made out of any suitable material, such as plastic or aluminium. The term "capsule" includes packages / bags made of non-rigid materials, for example paper, card or a woven or non-woven material such as is used for tea bags. Capsules can also be made from materials which dissolve and / or disintegrate in water, e.g. rice paper, a soluble film or even from tea leaves.

The present invention will now be described with reference to the figures, wherein:
Figure 1 shows a brewing device according to the invention.
Figure 2 is a schematic diagram showing the functional main components of the device.
Figure 3 shows the device of Figure 1 with the capsule holder in its lowered position.
Figure 4 shows the device as in Figure 3, but now with a capsule inserted into the capsule holder.
Figure 5 shows the capsule holder removed from the device.
Figure 6 shows a capsule
Figure 7 shows a preferred embodiment with a piercing blade for opening the lid of the capsule.

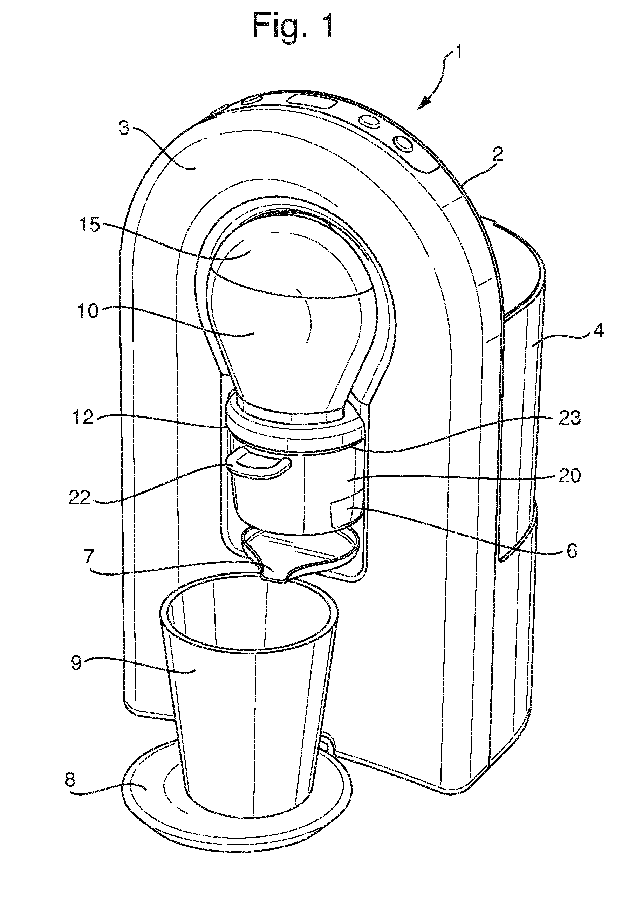

Figure 1 shows one non-limiting embodiment of a brewing device according to the invention. The device **1** has a casing **2** with a front side **3** and a rear side **4.** An infusion chamber **10** and a capsule holder **20** are located at the front side of the device. The infusion chamber **10** has a bottom rim **12** which defines an opening in its lower side. The infusion chamber may have an opening in its top side which is covered with a removable lid **15,** or it may be constructed as a vessel without an opening in its top side. The capsule holder **20** is sized and shaped so as to receive a capsule. The capsule holder **20** has a handle **22** and is located on a support **6.** The capsule holder **20** is shown in position for brewing, i.e. so that the upper rim **23** of the capsule holder is in water-tight contact with the bottom rim **12** of the infusion chamber **10.** The infusion chamber **10** is supported and held in place by a manifold (not shown). A water reservoir, heater, and pump (not shown) are located inside the rear **4** of the casing. At the bottom of the front side **3** of the casing there is a tray **8** on which a cup **9** is placed when the beverage is dispensed. A dispensing spout **7** is positioned beneath the capsule holder.

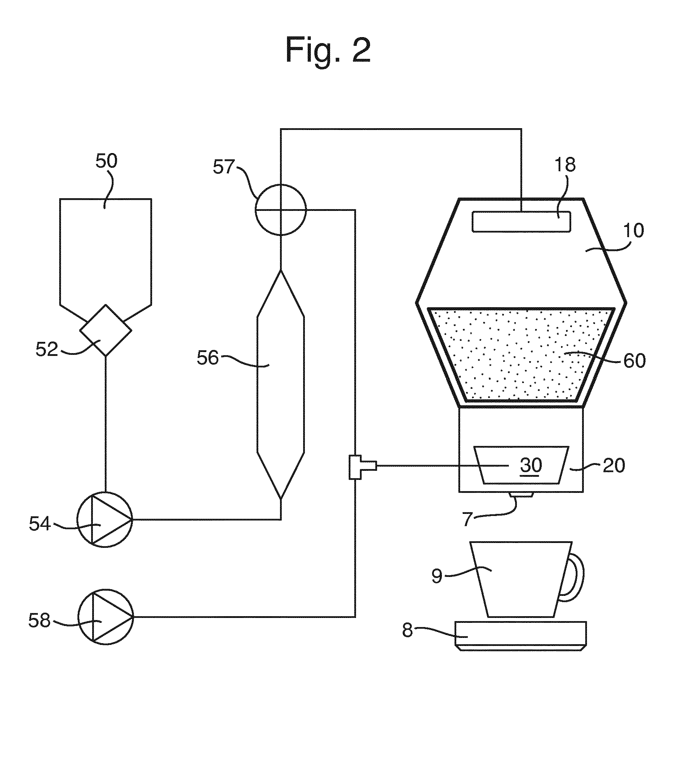

Figure 2 is a schematic diagram showing the main functional components of the device. Water from the reservoir **50** is fed to the infusion chamber **10** via a water filter **52,** a water pump **54,** a heater **56** and a valve **57.** The valve **57** controls the route the water takes between the heater **56** and the infusion chamber **10.** Firstly the water is pumped to the infusion chamber **10** via the capsule **30** in order to brew a beverage **60.** Subsequently, the valve **57** can re-direct the water such that it enters the brewing chamber **10** via a rinse head **18** in order to rinse and/or clean the brewing chamber **10.** There is also an air pump **58** which can pump air to the infusion chamber, preferably via the capsule **30** which is located in the capsule holder **20.** The spout **7,** cup **9** and tray **8** are located beneath the capsule holder **20**.

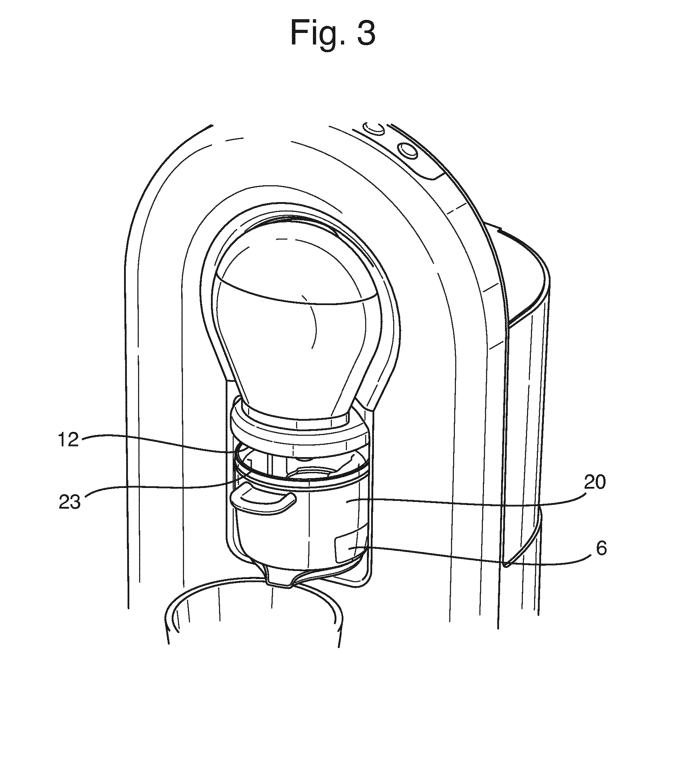

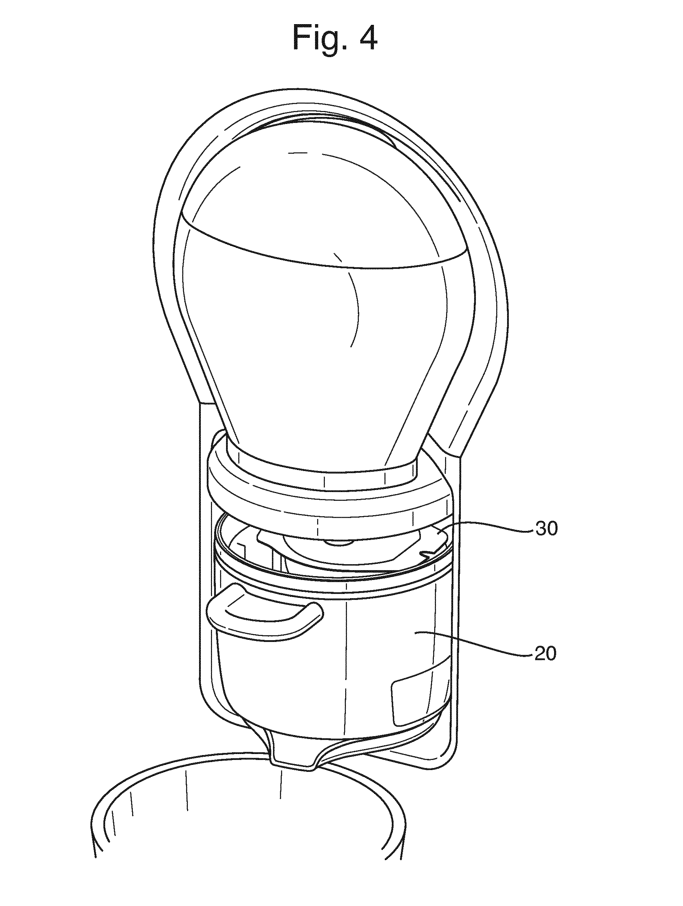

Figure 3 shows the device of Figure 1 with the capsule holder **20** lowered so that its upper rim **23** is separated from the bottom rim **12** of the infusion chamber. The capsule holder **20** is removable from the support **6** so that a capsule can be inserted. Figure 4 shows the device with a capsule **30** inserted into the capsule holder **20,** which is in the lowered position.

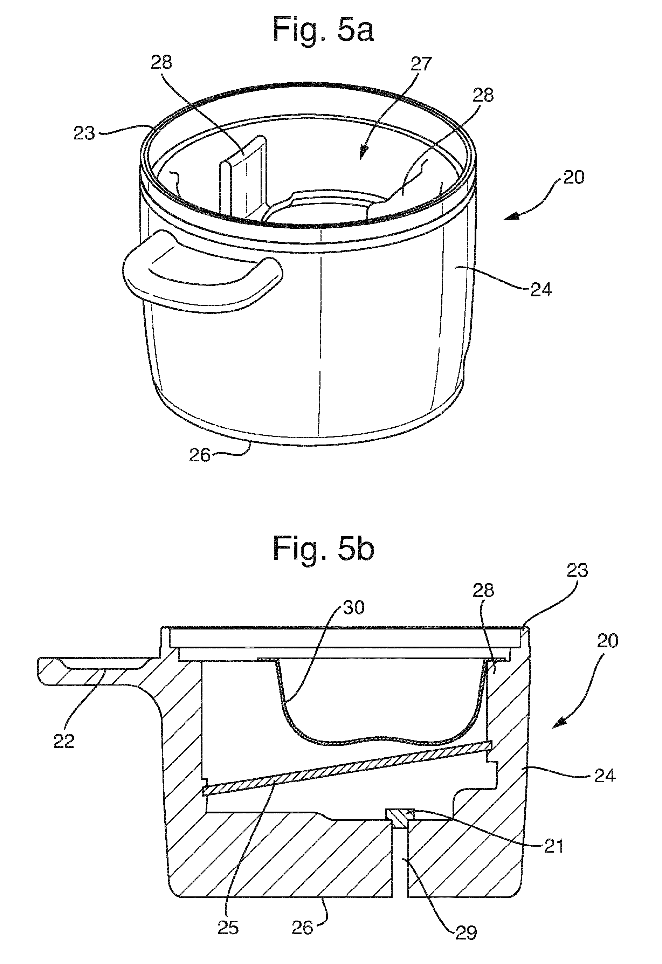

Figure 5 shows the capsule holder removed from the device **1:** (a) in a perspective view and (b) in cross-section. The capsule holder **20** has a side wall **24** with an upper rim **23.** The side wall **24** and base **26** define a cavity **27.** A filter **25** is located inside the capsule holder. Protrusions **28** support the capsule **30** inside the cavity **27** above the filter **25.** Beneath the filter **25** is a passage **29** through which the beverage flows during dispensing and which is closed by a drain valve **21** during brewing. The filter preferably consists of a fine mesh made for example of stainless steel. The mesh size must be sufficiently small to catch small pieces of beverage material but large enough to ensure that draining is not too slow. Preferably, the mesh size is from 100 to 500 microns, more preferably 150 to 300 microns. Preferably the filter (when in its normal position in the device) is inclined to the horizontal at an angle of from 5 to 45°, preferably from 10 to 30°, such as about 20°. Having the filter at an angle to the horizontal has two advantages: firstly it presents a larger surface area, and hence increases the speed of draining. Secondly beverage material collects at the bottom of the sloped filter while leaving the upper part clear of beverage material so that the beverage drains freely through it.

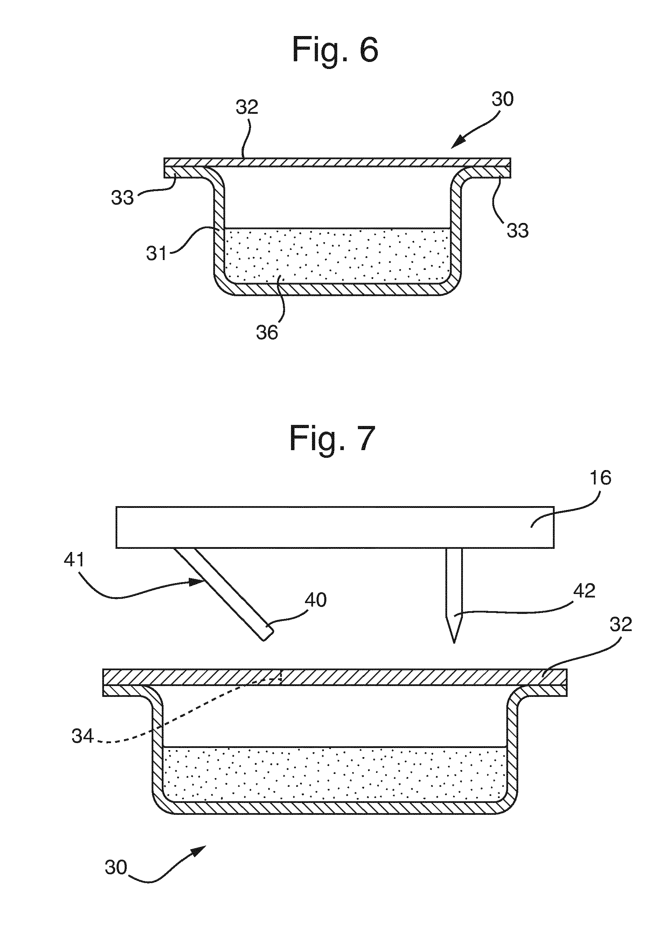

Figure 6 shows a capsule **30.** The capsule **30** can be of any suitable design. In order to facilitate efficient and cost-effective manufacture, it is preferred that the capsule is formed by injection moulding or by thermoforming. Preferably the capsule comprises a body part **31** and a lid **32,** the lid being attached to the body part so as to enclose the infusible beverage material **36** within the capsule. In this embodiment, the body part is preferably formed by injection moulding or by thermoforming, and the beverage material is subsequently enclosed within the capsule by attaching the lid to the body part. In a particularly preferred embodiment, the body part comprises a rim **33,** and the lid is attached to the body part around the rim, e.g. by heat-sealing. The lid may be made of a thin film, such as foil. The body part is preferably made from a water-impermeable material. Since the filter is not located in the capsule, there is no need to puncture or otherwise make an opening in the base of the capsule. This greatly simplifies the construction of the capsule as the body part can be e.g. injection moulded as a single piece, which only requires filling with beverage material, followed by covering with a lid.

Since the functionality required of the capsule is significantly reduced compared to known capsules which contain a filter, the capsule can be much smaller and / or can have thinner walls since it only needs to be large enough and strong enough to contain the dry infusible beverage material. The capsule can be made from materials conventionally used for beverage capsules, such as plastic or aluminium. However, it can also be made of non-rigid materials (for example paper, card or a woven or non-woven material such as is used for tea bags). The capsule could even be made wholly or partly of a material which itself is a beverage material. In this embodiment the capsule breaks up and / or dissolves during brewing. For example the capsule could be made of rice paper, a soluble film or even from tea leaves that have been pressed or otherwise stuck together (in which case the capsule itself is the infusible beverage material).

In use, the device functions as follows. With the capsule holder in its lowered position, the user removes the capsule holder from the support. A capsule containing infusible beverage material is placed into the cavity of the capsule holder and rests on the protrusions which hold it in the correct position.

The capsule holder is then replaced on the support. The user then raises the support, for example by pressing a button on the device which activates an actuator. The capsule holder travels vertically upwards until it connects with the infusion chamber, and forms a water tight seal. In an alternative embodiment, the infusion chamber could move down towards the capsule holder.

In the context of the present invention, 'connecting the upper rim of the capsule holder to the bottom rim of the infusion chamber' and 'the upper rim is in connected to the bottom rim of the infusion chamber' should be understood to mean that upper rim of the capsule holder and the bottom rim of the infusion chamber form a water-tight contact, so that the capsule holder and infusion chamber form a vessel in which the brewing liquid can be held while brewing takes place. The capsule holder and infusion chamber may be connected by means of an intermediate member such as a gasket (for example a rubber or foam ring located on the upper rim of the capsule holder and / or the bottom rim of the infusion chamber) in order to provide a good seal. Preferably the infusion chamber and the capsule holder form an enclosed space when connected.

The device may have means for recognizing a capsule and / or reading information from a code on the capsule. This allows the capsule to be recognized by the device, so that the device can automatically set the parameters for the brewing operation, such as the brewing time, water temperature etc.. It also allows the device to be programmed so that it only operates if the correct type of capsule is present. Thus a valid code signifies that an expected type of capsule is present, and an invalid code signifies an unexpected type of capsule, a capsule that has already been used or that no capsule is present. The recognition system can be of any suitable type, such as mechanical interlocking between the capsule and the capsule holder; optical recognition (e.g. by means of colour, fluorescence or bar code), electrical, magnetic, radio-frequency identification (RFID) chip etc.. The code may be provided for example as a tag attached to the capsule. A tag is particularly suitable for a capsule which dissolves or breaks up during brewing.

Optionally, the device may also have means for allowing the user to adjust the parameters of the brewing operation, such as the brewing time, the cup size etc. The means may suitably consist of buttons or other inputs on the device, together with a control system.

The capsule preferably has a lid, which needs to be opened or removed in order to release the beverage material. In one embodiment, the lid is removed by the user before the capsule is inserted in to the device. Alternatively, the lid is opened automatically by the device after the capsule is inserted into the capsule holder, e.g. as the upper rim of the capsule holder is connected to the bottom rim of the infusion chamber. Preferably, two openings are made in the lid, one to introduce liquid into the capsule and the other to release liquid and beverage material into the infusion chamber However, because the capsule does not have a filter, there is no need to puncture or otherwise make an opening in the base of the capsule. This greatly simplifies the construction of the capsule.

In a preferred embodiment, shown in Figure 7, the lid is opened by pushing it against one or more static opening members when the capsule holder travels upwards to connect with the bottom rim of the infusion chamber. The lid **32** is pushed against a static opening member **40** located on the infusion chamber manifold **16.** The function of the member is to create an opening in the lid in order to release liquid and beverage material. This can be achieved by a member with a sharp edge which cuts or punctures the lid. Alternatively, the lid may have pre-formed weaknesses, such as perforations **34** which reduce the force required to open it. In this case, the member **40** can be blunt, for example a wire. Preferably the member is angled or has a sloped rear part **41** so that as it moves into the capsule, the flap formed by opening the lid is pushed away from the opening and held out of the way whilst the beverage material is released from the capsule.

In the preferred embodiment shown in Figure 7, a second opening for introducing liquid into the capsule is made by pushing the lid against a static needle **42** consisting of a tube with a pointed end. The needle **42** pierces the lid. Water is then pumped from the reservoir to the heater, which is preferably a flow-though heater. The resulting hot water (and optionally steam) is then pumped to the capsule and enters it through the needle. The influx of hot water pushes the infusible beverage material out from the capsule through the opening made by the opening member **40** and into the infusion chamber **10.**

The heater and pump are controlled so that the target brew temperature (which is typically in the range 80°C to 95°C) is achieved in the infusion chamber. Typically the water flow rate is in the range of 200 to 400ml/min, and the volume of water is 150 to 300ml, depending on the desired size of the beverage.

Preferably the infusion chamber **10** is made of transparent material such as glass, perspex, pyrex, etc., so that the user can see the motion of the infusible beverage material (such as tea leaves) whilst the beverage is brewing. Air may be pumped into the capsule holder **20** or directly into the infusion chamber **10** to create bubbles in the water and thereby agitate the beverage material. This not only enhances the visual appearance, but also aids infusion and helps to prevent the beverage material from sticking to the sides of the infusion chamber. Moreover, the introduction of air releases aroma which can optionally be vented via a tube, which for example, has an outlet near to the dispensing spout, thereby providing the user with the aroma of tea during brewing. The brewing time, which typically ranges from 10 to 120 seconds, is preferably set by user input and / or information read from the capsule.

Once brewing has taken place for the required time, the drain valve **21** located in the base of the capsule holder **20** is opened, allowing the beverage to drain from the infusion chamber. Preferably the opening of the drain valve is controlled automatically by the machine. The beverage flows from the infusion chamber through the filter **25** located in the capsule holder below the capsule, then through the passage **29,** and finally into a cup **9** which the user has already placed onto the tray **8.** Tea material is prevented from entering the cup **9** by the filter **25.** Optionally, there may be a dispensing spout **7** positioned beneath the capsule holder, so that the beverage is dispensed through the drain valve and out through the spout. Thus, instead of being dispensed vertically downwards into the cup, the beverage follows an arc, similar to that of tea poured from the spout of a tea pot. This enhances the "theatre" provided by the machine for the user, and also emphasizes the "tea-ness" of the beverage, as distinct from coffee making machines.

After the beverage has been dispensed, the infusible material and / or beverage residue may be rinsed from the wall of the brew chamber with further hot water. Preferably the rinsing water is introduced through rotating rinse jets **18** located near the top of the infusion chamber. Better rinsing is achieved by rotating rinse jets than static ones. In a preferred embodiment, rinsing takes place immediately after the beverage has been dispensed, and the rinse water is also dispensed into the cup and becomes part of the beverage. This removes the need for separate disposal of the rinse water. In this case, the rinse water provides around 15 - 30% of the total volume of the beverage, i.e. the volume of rinse water used is around 50ml.

Finally, after the beverage has been dispensed, the user lowers the capsule holder and removes it from the support, using the handle **22.** The used capsule and spent tea leaves are then disposed of, and the capsule holder can be rinsed. Since the capsule holder is removable from the brewing device, it is easy to clean. The capsule holder is then returned to the support, ready for the next use.

The device can be cleaned, for example by running a rinse cycle with no beverage material or by running a cycle with a specific capsule containing a cleaning material, for example sodium percarbonate.

The various features of the embodiments of the present invention referred to in individual sections above apply, as appropriate, to other sections *mutatis mutandis.* Consequently features specified in one section may be combined with features specified in other sections as appropriate. Various modifications of the described modes for carrying out the invention which are apparent to those skilled in the relevant fields are intended to be within the scope of the following claims.

## Claims

1. A method of preparing a beverage in a brewing device (1), the device comprising:
• an infusion chamber (10) with a bottom rim (12) which defines an opening;
• a capsule holder (20) for receiving a capsule (30), the capsule holder comprising a sidewall (24) having an upper rim (23), a filter (25) and an openable and closable passage (29) on the opposite side of the filter from the upper rim;
the method comprising the steps of:
a) inserting a capsule (30) containing infusible beverage material into the capsule holder (20);
b) connecting the upper rim (23) of the capsule holder (20) to the bottom rim (12) of the infusion chamber (10);
c) introducing liquid into the capsule (30) and releasing the beverage material from the capsule so that the liquid and beverage material mix and flow into the infusion chamber (10) so as to brew the beverage;
d) after brewing has taken place, opening the passage (29) in the capsule holder (20) to allow the beverage to flow from the infusion chamber (10) through the filter (25) and out through the passage.

2. A method according to claim 1 wherein the infusible beverage material comprises tea plant material, herb plant material, flower material and/or fruit pieces.

3. A method according to claim 1 or claim 2 wherein the liquid is water at a temperature in the range of 80 to 95°C.

4. A method according to any of claims 1 to 3 wherein the capsule (30) comprises a body part (31) and a lid (32), the lid being attached to the body part so as to enclose the infusible beverage material (36) within the capsule.

5. A method according to claim 4 wherein the body part is made from a water-impermeable material.

6. A method according to claim 4 or claim 5 wherein the lid is opened automatically as the upper rim of the capsule holder is connected to the bottom rim of the infusion chamber.

7. A method according to claim 6 wherein the lid is opened by pushing it against one or more static opening members (40, 42).

8. A method according to claim 6 or claim 7 wherein two openings are made in the lid, one to introduce liquid and the other to release liquid and beverage material into the infusion chamber.

9. A method according to claim 8 wherein the opening to introduce liquid is made by pushing the lid against a static needle (42) which pierces the lid so that the liquid can enter the capsule through the needle.

10. A method according to claim 8 or claim 9 wherein the opening to release liquid and beverage material is made by an opening member (40) which is angled or has a sloped rear part (40) so that as it moves into the capsule, the flap formed by opening the lid is pushed away from the opening.

11. A method according to any of claims 8 to 10 wherein the lid has pre-formed weaknesses (34), and wherein the opening to release liquid and beverage material is made by a blunt opening member (40).

12. A brewing device (1) comprising
• an infusion chamber (10) with a bottom rim (12) which defines an opening;
• a capsule holder (20) for receiving a capsule (30), the capsule holder comprising a sidewall (24) having an upper rim (23), a filter (25) and an openable and closable passage (29) on the opposite side of the filter from the upper rim;
• means for moving the capsule holder and / or the infusion chamber so that the upper rim (23) of the capsule holder is connected to the bottom rim (24) of the infusion chamber;
• means (42) for introducing liquid into the capsule so that the liquid and beverage material can mix and flow into the infusion chamber so as to brew the beverage;
• a valve (21) for opening the passage in the capsule holder to allow the beverage to flow from the infusion chamber through the filter and out through the passage.

13. A device according to claim 12 wherein the capsule holder is removable from the device.

14. A device according to claim 12 or claim 13 wherein there is a gasket on on the upper rim (23) of the capsule holder and / or the bottom rim (12) of the infusion chamber.

15. A device according to any of claims 12 to 14 wherein the filter (25) is inclined to the horizontal at an angle of from 5 to 45°.

## Patentansprüche

1. Verfahren zum Zubereiten eines Getränks in einer Brühvorrichtung (1), wobei die Vorrichtung umfasst:
• eine Aufgusskammer (10) mit einem unteren Rand (12), der eine Öffnung definiert;
• einen Kapselhalter (20) zum Aufnehmen einer Kapsel (30), wobei der Kapselhalter eine Seitenwand (24) mit einem oberen Rand (23), einen Filter (25) und einen Durchgang (29), der geöffnet und geschlossen werden kann, auf der dem oberen Rand entgegengesetzten Seite des Filters umfasst;
wobei das Verfahren die folgenden Schritte umfasst:
a) Einsetzen einer Kapsel (30), die aufgießbares Getränkematerial umfasst, in den Kapselhalter (20);
b) Verbinden des oberen Rands (23) des Kapselhalters (20) mit dem unteren Rand (12) der Aufgusskammer (10);
c) Einführen von Flüssigkeit in die Kapsel (30) und Freisetzen des Getränkematerials aus der Kapsel, so dass sich die Flüssigkeit und das Getränkematerial mischen und in die Aufgusskammer (10) zu fließen, um das Getränk aufzubrühen;
d) nach erfolgtem Aufbrühen Öffnen des Durchgangs (29) in dem Kapselhalter (20), um dem Getränk zu ermöglichen, aus der Aufgusskammer (10) durch den Filter (25) und durch den Durchgang heraus fließen.

2. Verfahren nach Anspruch 1, wobei das aufgießbare Getränkematerial Teepflanzenmaterial, Kräuterpflanzenmaterial, Blumenmaterial und/oder Fruchtstückchen enthält.

3. Verfahren nach Anspruch 1 oder Anspruch 2, wobei die Flüssigkeit Wasser in einem Temperaturbereich zwischen 80 und 95 °C ist.

4. Verfahren nach einem der Ansprüche 1 bis 3, wobei die Kapsel (30) einen Körperteil (31) und einen Deckel (32) umfasst, wobei der Deckel an dem Körperteil befestigt ist, um das aufgießbare Getränkematerial (36) in der Kapsel einzuschließen.

5. Verfahren nach Anspruch 4, wobei der Körperteil aus einem wasserdichten Material hergestellt ist.

6. Verfahren nach Anspruch 4 oder Anspruch 5, wobei der Deckel automatisch geöffnet wird, wenn der obere Rand des Kapselhalters mit dem unteren Rand der Aufgusskammer verbunden wird.

7. Verfahren nach Anspruch 6, wobei der Deckel geöffnet wird, indem er gegen ein oder mehrere statische Öffnungselemente (40,42) gedrückt wird.

8. Verfahren nach Anspruch 6 oder Anspruch 7, wobei an dem Deckel zwei Öffnungen erzeugt werden, eine, um Flüssigkeit einzulassen, und die andere, um die Flüssigkeit und das Getränkematerial in die Aufgusskammer freizusetzen.

9. Verfahren nach Anspruch 8, wobei die Öffnung zum Einführen der Flüssigkeit erzeugt wird, indem der Deckel gegen eine statische Nadel (42) gedrückt wird, die den Deckel durchsticht, so dass die Flüssigkeit durch die Nadel in die Kapsel gelangen kann.

10. Verfahren nach Anspruch 8 oder Anspruch 9, wobei die Öffnung zum Freisetzen der Flüssigkeit und des Getränkematerials durch ein Öffnungselement (40) erzeugt wird, das abgewinkelt ist oder einen abgeschrägten hinteren Teil (40) aufweist, so dass, während es sich in die Kapsel bewegt, die Lasche, die durch Öffnen des Deckels erzeugt wird, von der Öffnung weggedrückt wird.

11. Verfahren nach einem der Ansprüche 8 bis 10, wobei der Deckel vorgefertigte Schwachstellen (34) aufweist und wobei die Öffnung zum Freisetzen der Flüssigkeit und des Getränkematerials durch ein stumpfes Öffnungselement (40) erzeugt wird.

12. Brühvorrichtung (1), die umfasst:
• eine Brühkammer (10) mit einem unteren Rand (12), der eine Öffnung definiert;
• einen Kapselhalter (20) zum Aufnehmen einer Kapsel (30), wobei der Kapselhalter eine Seitenwand (24) mit einem oberen Rand (23), einen Filter (25) und einen Durchgang (29), der geöffnet und geschlossen werden kann, auf der dem oberen Rand entgegengesetzten Seite des Filters umfasst;
• Mittel, um den Kapselhalter und/oder die Aufgusskammer so zu bewegen, dass der obere Rand (23) des Kapselhalters mit dem unteren Rand (24) der Aufgusskammer verbunden wird;
• Mittel (42), um Flüssigkeit in die Kapsel einzuführen, so dass sich die Flüssigkeit und das Getränkematerial mischen und in die Aufgusskammer fließen, um das Getränk aufzubrühen;
• ein Ventil (21), um den Durchgang in den Kapselhalter zu öffnen, damit es dem Getränk ermöglicht wird, von der Aufgusskammer durch den Filter und durch den Durchgang heraus zu fließen.

13. Vorrichtung nach Anspruch 12, wobei der Kapselhalter aus der Vorrichtung entfernt werden kann.

14. Vorrichtung nach Anspruch 12 oder Anspruch 13, wobei sich eine Dichtung auf dem oberen Rand (23) des Kapselhalters und/oder auf dem unteren Rand (12) der Aufgusskammer befindet.

15. Vorrichtung nach einem der Ansprüche 12 bis 14, wobei der Filter (25) unter einem Winkel zwischen 5° und 45° zur Horizontalen geneigt ist.

## Revendications

1. Procédé de préparation d'une boisson dans un dispositif d'infusion (1), le dispositif comprenant :
une chambre d'infusion (10) avec un rebord inférieur (12) qui définit une ouverture ;
un support de capsule (20) pour recevoir une capsule (30), le support de capsule comprenant une paroi latérale (24) comportant un rebord supérieur (23), un filtre (25) et un passage (29) pouvant être ouvert et fermé sur le côté opposé du filtre depuis le rebord supérieur ;
le procédé comprenant les étapes consistant à :
a) insérer une capsule (30) contenant un matériau de boisson infusable dans le support de capsule (20) ;
b) relier le rebord supérieur (23) du support de capsule (20) au rebord inférieur (12) de la chambre d'infusion (10) ;
c) introduire du liquide dans la capsule (30) et libérer le matériau de boisson de la capsule de telle manière que le liquide et le matériau de boisson se mélangent et s'écoulent dans la chambre d'infusion (10) de façon à infuser la boisson ;
d) après que l'infusion a eu lieu, ouvrir le passage (29) dans le support de capsule (20) pour permettre à la boisson de s'écouler de la chambre d'infusion (10) à travers le filtre (25) et au-dehors à travers le passage.

2. Procédé selon la revendication 1 dans lequel le matériau de boisson infusable comprend un matériau de thé, un matériau d'herbe, un matériau de fleur et/ou des morceaux de fruits.

3. Procédé selon la revendication 1 ou la revendication 2 dans lequel le liquide est de l'eau à une température dans une plage de 80 à 95°C.

4. Procédé selon l'une quelconque des revendications 1 à 3 dans lequel la capsule (30) comprend une partie de corps (31) et un couvercle (32), le couvercle étant fixé sur la partie de corps de façon à enfermer le matériau de boisson infusable (36) dans la capsule.

5. Procédé selon la revendication 4 dans lequel la partie de corps est faite d'un matériau imperméable à l'eau.

6. Procédé selon la revendication 4 ou la revendication 5 dans lequel le couvercle est ouvert automatiquement quand le rebord supérieur du support de capsule est relié au rebord inférieur de la chambre d'infusion.

7. Procédé selon la revendication 6 dans lequel le couvercle est ouvert en le poussant contre un ou plusieurs éléments d'ouverture statiques (40, 42)

8. Procédé selon la revendication 6 ou la revendication 7 dans lequel deux ouvertures sont faites dans le couvercle, l'une pour introduire du liquide dans l'autre pour libérer du liquide et du matériau de boisson dans la chambre d'infusion.

9. Procédé selon la revendication 8 dans lequel l'ouverture pour introduire du liquide est faite en poussant le couvercle contre une aiguille statique (42) qui perce le couvercle de telle manière que le liquide peut entrer dans la capsule à travers l'aiguille.

10. Procédé selon la revendication 8 ou la revendication 9 dans lequel l'ouverture pour libérer le liquide et le matériau de boisson est faite par un élément d'ouverture (40) qui est incliné ou a une partie arrière en pente (40) de telle manière que quand il se déplace dans la capsule, le volet formé en ouvrant le couvercle est écarté de l'ouverture.

11. Procédé selon l'une quelconque des revendications 8 à 10 dans lequel le couvercle a des faiblesses préformées (34), et dans lequel l'ouverture pour libérer le liquide et le matériau de boisson est faite par un élément d'ouverture arrondi (40)

12. Dispositif d'infusion (1) comprenant
une chambre d'infusion (10) avec un rebord inférieur (12) qui définit une ouverture ;
un support de capsule (20) pour recevoir une capsule (30), le support de capsule comprenant une paroi latérale (24) comportant un rebord supérieur (23), un filtre (25) et un passage (29) pouvant être ouvert et fermé sur le côté opposé du filtre depuis le rebord supérieur ;
des moyens pour déplacer le support de capsule et/ou la chambre d'infusion de telle manière que le rebord supérieur (23) du support de capsule est relié au rebord inférieur (24) de la chambre d'infusion ;
des moyens (42) pour introduire du liquide dans la capsule de telle manière que le liquide et le matériau de boisson peuvent se mélanger et s'écouler dans la chambre d'infusion de façon à infuser la boisson ;
une vanne (21) pour ouvrir le passage dans le support de capsule pour permettre à la boisson de s'écouler depuis la chambre d'infusion à travers le filtre et au-dehors à travers le passage.

13. Dispositif selon la revendication 12 dans lequel le support de capsule est amovible du dispositif.

14. Dispositif selon la revendication 12 ou la revendication 13 dans lequel il y a un joint sur le rebord supérieur (23) du support de capsule et/ou le rebord inférieur (12) de la chambre d'infusion.

15. Dispositif selon l'une quelconque des revendications 12 à 14 dans lequel le filtre (25) est incliné par rapport à l'horizontale à un angle de 5 à 45°.
